# EUROPEAN PATENT APPLICATION

(11) **EP 1 849 854 A1**
(43) Date of publication of application: **31.10.2007**
(21) Application number: 06008648.5
(22) Date of filing: 26.04.2006
(51) Int. Cl.: C11C 3/00, B01J 19/12, C10G 3/00

(54) **Biodiesel production process through transesterification/esterification reaction of vegetal oils or animal fats with alcohols induced by microwave radiation**

(71) Applicant: Dall 'Oglio, Evandro Luiz, 78068-270 Santa Cruz /Culaba MT (BR); Garofalo, Macelo Neves, 88020-560 Florianopolis SC (BR); De Souza Jr., Paulo Teixeira, 78069-900 Cuiaba MT (BR)
(72) Inventor: Dall 'Oglio, Evandro Luiz, 78068-270 Santa Cruz /Culaba MT (BR); Garofalo, Macelo Neves, 88020-560 Florianopolis SC (BR); De Souza Jr., Paulo Teixeira, 78069-900 Cuiaba MT (BR)
(74) Representative: Urizar Anasagasti, José Antonio

(57) **Abstract**

BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION, affording fatty acid monoalkylesters from the microwave induced (2.450 or 915 MHz) acid or base catalyzed transesterification/esterification reaction of vegetable oils or animal fats or fatty acid, through a microwaves generator coupled to the reaction cavity. The process occurs by dissipating the microwaves' energy using polarization mechanisms and electric conductivity generated in the reaction medium due to the high dielectric permittivity, propitiated by the catalyst.

## Description

### OBJECT OF THE INVENTION

The present invention reports the production of fatty acids monoalkylesters through the transesterification or esterification reactions of vegetal oils, animal fat and fatty acids in general with alcohols, in an acid or alkaline medium. The reaction is performed employing an adapted reactor to use energy in the microwaves frequency range, 915 MHz and or 2.450 MHz.

### BACKGROUND OF THE INVENTION

Traditionally, fatty acids monoalkylesters are produced from vegetal or animal fats in a reaction medium where the mixture heating is performed by means of jacketing the reactor and/ or through coils using steam or hot water. Normally, the reaction is performed in an alkaline medium, since it is usually faster, easier to control and more efficient than in an acid medium. Although it is also possible to carry out the reaction in acid medium, using the heating apparatus mentioned above, this process is avoided since it requires longer reaction time as well as the use of higher temperatures. The reaction can also be performed with heterogeneous catalysts, namely transition metals and enzymes (e.g. lipases).

The transesterification or esterification reactions are known to take place by mixing a vegetal oil, an animal fat or a fatty acid, with an alcohol and a homogeneous (which can be an acid or a base) or a heterogeneous catalyst (e.g. transition metals or enzymes). Sometimes, heating the reaction mixture is also necessary, in order to make it to proceed smoothly. The use of steam or hot water promotes a gradual and non-homogeneous heating, making it difficult to control the temperature. The heat comes inward in the case of a heating jacket or outward in the case of a coil, even using mechanical stirring. The problems associated to these processes rely on the long time period usually necessary to get the ideal reaction temperature, as well as to perform the process as a whole; heterogeneous catalysis present the disadvantage of high costs associated to the catalysts. Furthermore, the base catalyzed processes present the problem of monoalkylesters loss due to the forming of soaps when fatty acids are present. The forming of soaps can be prevented by using refined oils with low acidity levels at the expense of increasing the overall cost of the process, however.

Patent document WO03014272 to Alberto Breccia Fratadocchi (IT) describes a process and a microwave radiation device. The author reports a hydrolytic process followed by esterification, in basic medium; the reaction was carried out with the aid of a heterogeneous catalyst.

It is well known that the energy in the microwaves frequency range, namely 2.450 and 915 MHz, interacts with chemical substances and, depending on their structure, cause molecular rotation followed by heating. Up to this moment, the so called magnetron is the microwaves' source most used by radars and thermal treatments. The great success of the microwaves generator (the magnetron) can be attributed to its low cost, its good efficiency and its proved stability.

### DESCRIPTION OF THE INVENTION

The aim of this invention is to use a device, consisting in a cavity developed to allow the use of microwaves, through microwaves generator (magnetrons) and the use of this device in order to induce, through microwave radiation, the transesterification or esterification reactions of a vegetable oil, animal fat or fatty acid to proceed smoothly in acidic or basic media. Microwave radiation accelerates the heating process and promotes the reaction, in acidic media, in a shorter time when compared to conventional heating methods. The process described herein is secure and efficient, affording the products in higher yields, when compared to the base catalyzed processes, since it avoids soap formation, and take advantage of the presence of free fatty acids, which, in this case, accelerates the reaction further. Therefore, the oil/animal fat purity requirements are lower than in the conventional base catalyzed process, making this acidic microwave induced process much cheaper than the conventional processes.

The invention is based on using electromagnetic waves in the range of the microwaves frequency (2,450 and 915 MHz), introduced into the reaction cavity through microwaves generators. The interaction of the microwave frequencies (2.450 and 915 MHz) with a reaction mixture containing a vegetable oil, an animal fat or a fatty acid, an alcohol and a catalyst, affords fatty acids monoalkylesters in high yields and in a short time. The absorption of microwaves by materials depends on the magnitude of the values of the dielectric permittivity (ε) of the reaction media. Materials with high values greatly absorb and dissipate part of the waves' energy to the medium through mechanisms like Maxwell-Wagner polarization type, associated to a dipolar orientation movements and electrical conducting, associated to atomical and electronical movements. In this context, the selected catalysts, besides performing their chemical effect turn the medium more permissive to the microwaves. The reagents and catalysts are stirred in the cavity; then, the microwaves are irradiated over the mixture during a period of time and power depending on the quantity of the material to be transformed. The separating of the glycerin formed as a co-product, as well as the washing of the monoalkylesters obtained in the process are performed through a conventional way. When vegetal oils or animal fat of low quality are used it may be necessary a more specific purification. The process can also be performed beginning with acid catalysis up to a conversion of 80%, for example, then, after taking all the glycerin and the catalyst off, finishes the process with a base catalyst in a shorter period of time when compared to the traditional process. The acid catalysis can be performed with sulfuric, and nitric acids, among others, while in the base catalysis sodium or potassium hydroxide are usually used. The process described in this report, namely the transesterification or esterification reactions induced by microwaves in acid or base media, is more effective than the traditional methodologies and more effective than the hydrolysis/esterification induced through microwaves described in patent WO03014272 to Alberto Breccia Fratadocchi (IT), since it occurs faster and only in a single reaction step; by this way, it is also possible to carry out the simultaneous esterification of the free fatty acids present in the vegetal oils and animal fats.

### BRIEF DESCRIPTION OF THE DRAWINGS

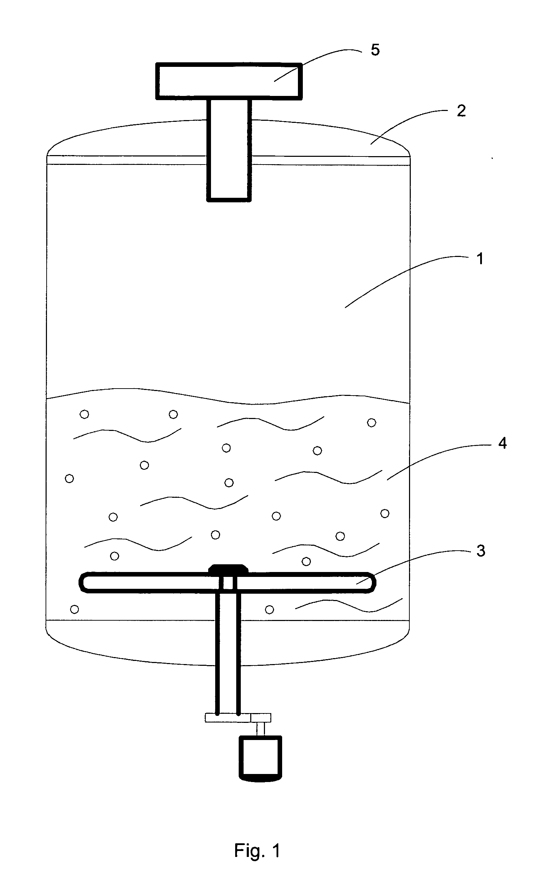

Figure 1 shows cavity (1) with lid (2) used to the microwaves' irradiation over oil or animal fat, alcohol and catalyst mixture(4). It has been used a cavity (1) working as a batch. The mixture(4) is poured into cavity(1) under stirring using a Teflon blade system(3) coupled to a moto-reducer or a motor with frequency inverting and, then, microwaves are irradiated through a microwaves generator(5) during a period of time and power varying according to the quantity and quality of mixture(4).

The process is additionally explained by means of the following example:
vegetable oil is stirred vigorously (5 min.) with the acid catalyst (2% v/v), followed by ethanol addition (1:3 molar excess related to the oil). Microwaves are irradiated over this mixture during a period of time and power depending on the quantity of mixture to be transformed. After the reaction is finished, the glycerin is eliminated by decantation and the excess of alcohol is eliminated under reduced pressure at 50 °C. The pure ethylic esters are obtained after washing (3 times) the crude mixture with hot water (10% v/v; 80°C), followed by the complete elimination of the water under reduced pressure (50 °C) and dried with the help of a vacuum pump at 50° C degrees until the water is completely removed.

## Claims

1. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION where the production of fatty acids monoalkylesters is performed through the transesterification/esterification reactions of vegetable oils, animal fats or free fatty acids with alcohols and the reaction is carried out by microwave heating, in a reaction cavity, **characterized by** the presence of a catalyst (2% v/v or variables percentages from 0, 1 % to 5%) in the oil/fat/fatty acid and the alcohol (1:6 molar excess) under vigorous stirring.

2. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION, according to claim 1, **characterized by** heating the reaction mixture with microwave radiation (2.450 and 915 MHz) produced by a microwave generator coupled to the reaction cavity.

3. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 1, **characterized by** being the microwave energy dissipation based on polarization models and electric conduction, coming from the high dielectric permittivity in the reaction medium, afforded by the use of acidic or basic catalysts;

4. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 1, **characterized by** being the microwave energy dissipation based on polarization models and electric conduction, coming from the high dielectric permittivity in the reaction medium, induced by the use of acid or basic catalysts;

5. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 3, **characterized by** being the acid catalysis performed with sulfuric acid.

6. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 3, **characterized by** being the acid catalysis performed with nitric acid or sulfuric acid and your derivates.

7. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 3, **characterized by** being the acid catalysis performed by acids with high dielectric permittivity values.

8. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 4, **characterized by** being the base catalysis performed with sodium hydroxide, potassium hydroxide or bases with high dielectric permittivity values.

9. BIODIESEL PRODUCTION PROCESS THROUGH TRANSESTERIFICATION/ESTERIFICATION REACTION OF VEGETAL OILS OR ANIMAL FATS WITH ALCOHOLS INDUCED BY MICROWAVE RADIATION according to claim 1, **characterized by** a two stage process, initiating with an acid catalyst up to a conversion of up to 80% and, then, after taking all the glycerin off ending the process with a base catalysis.
